# EUROPÄISCHE PATENTANMELDUNG

(11) **EP 4 596 358 A1**
(43) Veröffentlichungstag der Anmeldung: **06.08.2025**
(21) Anmeldenummer: 24155218.1
(22) Anmeldetag: 01.02.2024
(51) Int. Cl.: B60W 60/00, G01M 17/06, G06N 3/092

(54) **VERFAHREN ZUM TESTEN EINES FAHRZEUGES**

(71) Anmelder: VOLKSWAGEN AG, 38440 Wolfsburg (DE)
(72) Erfinder: BERINGHOFF, Felix, 38442 Wolfsburg (DE); RÖSENER, Christian, 30175 Hannover (DE); TICHY, Matthias, 89275 Elchingen (DE); GREENYER, Joel, 30827 Garbsen (DE)

(57) **Zusammenfassung**

Die Erfindung betrifft ein Verfahren zum, insbesondere automatischen, Testen eines Fahrzeuges (AV), vorzugsweise eines automatisiert oder autonom fahrenden Fahrzeuges (AV), auf einem Prüfplatz (HIL), bevorzugt einem Hardware-in-the-Loop-Prüfplatz, um das Fahrzeug (AV) in mindestens einem definierten Fahrszenario (SZ) zu testen, bspw. bei einem Fahrstreifenwechsel, wobei mindestens ein Fahrzeugsteuergerät (SG) und mindestens eine Sensoreinheit (SE) des Fahrzeuges (AV) an einen Simulator (SIM) auf dem Prüfplatz (HIL) angeschlossen werden,
wobei der Simulator (SIM) eine Fahrumgebung (FU) simuliert, um künstliche Sensorinputs für die mindestens eine Sensoreinheit (SE) bereitzustellen, wobei der Simulator (SIM) Ausgaben des mindestens einen Fahrzeugsteuergeräts (SG) in Reaktion auf künstliche Sensorinputs für die mindestens eine Sensoreinheit (SE) berücksichtigt, wie z. B. einen Lenkwinkel, Antriebsmoment usw., und wobei auf dem Prüfplatz (HIL) mindestens ein Agent (RL) zum Steuern von mindestens einem Umgebungsfahrzeug (OV) bereitgestellt wird, um das Fahrzeug (AV) gezielt zu stören, sodass das mindestens eine definierte Fahrszenario (SZ) herbeigeführt wird.

## Beschreibung

Die Erfindung betrifft ein Verfahren zum, insbesondere automatischen, Testen eines Fahrzeuges, vorzugsweise eines automatisiert oder autonom fahrenden Fahrzeuges, auf einem Prüfplatz, bevorzugt einem Hardware-in-the-Loop-Prüfplatz, um das Fahrzeug in mindestens einem definierten Fahrszenario zu testen, bspw. bei einem Fahrstreifenwechsel. Ferner betrifft die Erfindung vorteilhafte Verwendungen eines entsprechenden Verfahrens, ein korrespondierendes Computerprogrammprodukt, eine korrespondierende Steuereinheit und einen korrespondierenden Prüfplatz zum Ausführen eines entsprechenden Verfahrens.

Automatisiert oder autonom fahrende Fahrzeuge müssen zunächst getestet werden, bevor sie im Feld eingesetzt werden. Insbesondere müssen Fahrzeugfunktionen in dem Fahrzeug getestet werden. Zumeist werden Fahrzeuge in einer virtuellen Umgebung getestet. Unterschiedliche Tests sehen verschiedene Fahrszenarien vor. Hardware-in-the-Loop-Prüfplätze sind grundsätzlich bekannt, wo echte Fahrzeugsteuergeräte und Sensoren an einen Simulator angeschlossen werden. Das Fahrzeug kann dabei durch eine virtuelle Umgebung gefahren werden. Ein Simulator kann dabei die Fahrumgebung simulieren und auf diese Weise künstliche Sensorinputs für die echten Fahrzeugsensoren bereitstellen. Außerdem kann der Simulator die Fahrdynamik berechnen. Zudem kann der Simulator die Ausgaben der Fahrzeugelektronik und Fahrzeugaktorik (z. B. Lenkwinkel und Antriebsmoment) erhalten und berücksichtigen.

Als problematisch hat sich dabei herausgestellt, dass ein automatisiert oder autonom fahrendes Fahrzeug selbstständig Entscheidungen trifft, wie es fährt. Das Verhalten des Fahrzeugs kann deswegen nicht vordefiniert werden und es kann nicht genau prognostiziert werden, wie sich das Fahrzeug während der Fahrt verhält. Folglich ist es schwierig, gewünschte Testsituationen (oder mit anderen Worten, Startszenen) herzustellen, in denen das Fahrzeug getestet werden soll.

Es ist daher eine Aufgabe der vorliegenden Erfindung, wenigstens einen der voranstehend beschriebenen Nachteile zumindest teilweise zu überwinden. Insbesondere ist es Aufgabe der Erfindung, ein verbessertes Verfahren zum, insbesondere automatischen, Testen eines Fahrzeuges, vorzugsweise eines automatisiert oder autonom fahrenden Fahrzeuges, auf einem Prüfplatz, bevorzugt einem Hardware-in-the-Loop-Prüfplatz, bereitzustellen, um das Fahrzeug in mindestens einem definierten Fahrszenario zu testen, bspw. bei einem Fahrstreifenwechsel. Vorzugsweise ist es Aufgabe der Erfindung, ein Verfahren zum, insbesondere automatischen, Testen eines Fahrzeuges, vorzugsweise eines automatisiert oder autonom fahrenden Fahrzeuges, auf einem Prüfplatz, bevorzugt einem Hardware-in-the-Loop-Prüfplatz, bereitzustellen, welches mindestens ein definiertes Fahrszenario, bspw. bei einem Fahrstreifenwechsel, prognostiziert herbeiführt, welches eine planbare Anlaufphase und eine vorausschauend stattfindende Startszene zum Testen sicherstellt, welches die Tests reproduzierbar und zuverlässig durchführt, und welches unterschiedliche Tests mit unterschiedlichen Fahrszenarien gezielt ermöglicht. Ferner ist es Aufgabe der Erfindung, vorteilhafte Verwendungen eines entsprechenden Verfahrens, ein korrespondierendes Computerprogrammprodukt, eine korrespondierende Steuereinheit und einen korrespondierenden Prüfplatz zum Ausführen eines entsprechenden Verfahrens zur Verfügung zu stellen.

Die voranstehende Aufgabe wird gelöst durch: Ein Verfahren mit den Merkmalen des unabhängigen Verfahrensanspruchs sowie durch vorteilhafte Verwendungen eines entsprechenden Verfahrens, ein korrespondierendes Computerprogrammprodukt, eine korrespondierende Steuereinheit und einen korrespondierenden Prüfplatz zum Ausführen eines entsprechenden Verfahrens mit den Merkmalen der nebengeordneten Ansprüche. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Verwenden und/oder im Zusammenhang mit dem erfindungsgemäßen Computerprogrammprodukt und/oder im Zusammenhang mit der erfindungsgemäßen Steuereinheit und/oder im Zusammenhang mit dem erfindungsgemäßen Prüfplatz und jeweils umgekehrt, sodass bezüglich der Offenbarung zu den einzelnen Erfindungsaspekten stets wechselseitig Bezug genommen wird bzw. werden kann.

Die Erfindung sieht vor: Ein Verfahren zum, insbesondere automatischen, Testen eines Fahrzeugs (kann ebenfalls als ein Testfahrzeug bezeichnet werden), vorzugsweise eines automatisiert oder autonom fahrenden Fahrzeuges, auf einem Prüfplatz, bevorzugt einem Hardware-in-the-Loop-Prüfplatz, um das Fahrzeug in mindestens einem definierten Fahrszenario (kann ebenfalls als ein Verkehrsszenario bezeichnet werden) zu testen, bspw. bei einem Fahrstreifenwechsel, wobei mindestens ein Fahrzeugsteuergerät und mindestens eine Sensoreinheit des Fahrzeuges an einen Simulator auf dem Prüfplatz (bspw. elektrisch und/oder datentechnisch und/oder signaltechnisch oder mit anderen Worten kommunikationstechnisch) angeschlossen werden.

Dabei ist vorgesehen, dass der Simulator eine Fahrumgebung simuliert, um künstliche Sensorinputs für die mindestens eine Sensoreinheit bereitzustellen, dass der Simulator ggf. eine Fahrzeugdynamik bestimmt, und dass der Simulator Ausgaben des mindestens einen Fahrzeugsteuergeräts in Reaktion auf künstliche Sensorinputs für die mindestens eine Sensoreinheit berücksichtigt, wie z. B. einen Lenkwinkel, Antriebsmoment usw.

Die Erfindung sieht mindestens einen Agent (kann ebenfalls als eine Agenten-Steuerung bezeichnet werden) zum Steuern von mindestens einem Umgebungsfahrzeug auf dem Prüfplatz (bspw. am Simulator) vor, der speziell dazu eingerichtet ist, um das Fahrzeug gezielt zu stören, sodass das mindestens eine definierte Fahrszenario herbeigeführt wird, wobei insbesondere der mindestens eine Agent durch ein Verfahren eines maschinellen Lernens selbstständig eine Strategie erlernt hat, vorzugsweise vor dem Testen des Fahrzeuges, um die Wahrscheinlichkeit des Auftretens des mindestens einen definierten Fahrszenarios zu erhöhen.

Grundsätzlich ist es denkbar, dass ein Prüfplatz im Sinne der Erfindung Softwarekomponenten und/oder Hardwarekomponenten aufweisen kann, die bspw. an einem Ort oder an unterschiedlichen Orten vorgesehen sein können.

Zudem ist es denkbar, dass ein Prüfplatz im Sinne der Erfindung zumindest zum Teil als ein virtueller Prüfplatz, bspw. in einer Backendeinheit, z. B. in einer Cloud, bereitgestellt werden kann.

Außerdem ist es denkbar, dass ein Prüfplatz im Sinne der vorliegenden Erfindung zumindest zum Teil als ein physischer Prüfplatz, bspw. in einer Halle, z. B. bei einem Fahrzeughersteller, bereitgestellt werden kann.

Die Erfindung erkennt, dass der Simulator das automatisiert fahrende Fahrzeug nicht steuern kann, sodass der Simulator nicht garantieren kann, dass eine definierte Testsituation zum Durchführen eines gewünschten Tests eintritt.

Die Erfindung schlägt vor, mindestens ein Umgebungsfahrzeug so zu steuern, dass es das Testfahrzeug gezielt stört, um die Testsituation oder die Startszene herbeizuführen, die man für einen gewünschten Test benötigt. Beispielsweise kann das Umgebungsfahrzeug das Fahrzeug so beeinflussen, dass das Fahrzeug sich veranlasst fühlt, einen Fahrstreifenwechsel durchzuführen. Das Umgebungsfahrzeug kann aber auch einfach nur einen bestimmten Folgeabstand zu einem vorausfahrenden Fahrzeug einregeln.

Das Umgebungsfahrzeug kann vorteilhafterweise mithilfe eines Verfahrens zum maschinellen Lernen (vorzugsweise eines Reinforcement-Learning-Verfahrens bzw. eines Verfahrens zum bestärkenden Lernen) gesteuert werden, welches in einer Trainingsumgebung durch ein Versuchs- und Irrtum-Verfahren selbstständig erlernt hat, wie sich das Umgebungsfahrzeug verhalten muss, um bestimmte Situationen herbeizuführen.

Mindestens ein solcher Agent wird auf dem Prüfplatz, insbesondere am oder im Simulator, implementiert.

Über ein Szenarioskript kann die Steuerung von mindestens einem Umgebungsfahrzeug durch mindestens einen Agenten aktiviert werden.

Nach einem besonderen Vorteil können mehrere Agenten mit einer Spezialisierung auf der Realisierung von Fahrszenarien eines bestimmten Typs, mehrerer bestimmter Typen oder aller gewünschten Typen implementiert werden. Eine (vorzugsweise regelbasierte) Logik (bspw. in einem Szenarioskript und/oder in einer Agenten-Steuerung) kann vorzugsweise auswählen, welcher Agent für welchen Typ verwendet werden soll. Eine weitere Logik (bspw. in einem Szenarioskript und/oder in einer Agenten-Steuerung) kann schließlich überwachen, ob das definierte Fahrszenario wie gewünscht erreicht wurde. Daraufhin kann diese Logik ein Bestätigungssignal an ein Szenarioskript und/oder ein Startsignal an ein Testskript senden, sodass der gewünschte Test gestartet werden kann.

Eine Agenten-Steuerung kann folglich mehrere Agenten umfassen, zwischen denen je nach einem definierten Fahrszenario umgeschaltet werden kann.

Ein Agent kann dabei bspw. speziell für ein Fahrszenario eines bestimmten Typs ausgelegt sein.

Ein Agent kann dabei bspw. für alle Fahrszenarien für sämtliche gewünschte Tests ausgelegt sein.

Ein Agent kann dabei bspw. für einen Bereich von ähnlichen Fahrszenarien ausgelegt sein.

Wenn ein Agent für einen Bereich von ähnlichen Fahrszenarien ausgelegt ist, dann kann er über einen Observator Informationen erhalten, wie weit er vor dem Erreichen des jeweiligen konkreten Fahrszenarios entfernt ist.

Unterschiedliche Fahrszenarien können durch Szenariobedingungen bzw. Parameter definiert werden, wie bspw. der relative Abstand oder die relative Fahrgeschwindigkeit zwischen dem Umgebungsfahrzeug und dem Fahrzeug.

Das Verfahren kann ferner zur Steuerung mehrerer Umgebungsfahrzeuge verwendet werden. Für jedes Umgebungsfahrzeug kann dann die Agenten-Steuerung implementiert werden.

Wie oben bereits erwähnt, kann auf eine vorteilhafte Weise vorgesehen sein, dass das mindestens eine definierte Fahrszenario für unterschiedliche Tests mehrere definierte Fahrszenarien umfasst. Dabei ist es denkbar, dass für die mehreren definierten Fahrszenarios korrespondierende Agenten (so zu sagen eins zu eins) bereitgestellt werden, oder wobei für die mehreren definierten Fahrszenarios ein (sozusagen gemeinsamer) Agent bereitgestellt wird, oder dass für die mehreren definierten Fahrszenarios eine Auswahl an Agenten (die für einen Bereich von ähnlichen Fahrszenarien ausgelegt sein können) bereitgestellt wird. Auf diese Weise kann eine flexible Durchführung von unterschiedlichen Tests mit verschiedenen definierten Fahrszenarien ermöglicht werden.

Mit anderen Worten kann der mindestens eine Agent dazu ausgeführt sein,
- um ein definiertes Fahrszenario für einen gewünschten Test herbeizuführen,
- oder um alle definierte Fahrszenarios für alle gewünschten Tests herbeizuführen,
- oder um mehrere definierte Fahrszenarios für mehrere gewünschte Tests (bspw. für einen Bereich von ähnlichen Fahrszenarien) herbeizuführen.

Ferner kann vorgesehen sein, dass eine, insbesondere regelbasierte, Logik zum Auswählen eines passenden Agenten für einen gewünschten Test bereitgestellt wird, um das Fahrzeug in mindestens einem definierten Fahrszenario zu testen. Dabei ist es denkbar, dass die Logik in einem Szenarioskript und/oder in dem Agenten implementiert werden kann. Auf diese Weise kann eine flexible automatische Auswahl von unterschiedlichen Tests mit verschiedenen definierten Fahrszenarien ermöglicht werden.

Vorteilhafterweise kann zwischen einem Szenarioskript und dem mindestens einen Agenten eine Kommunikation und/oder eine Synchronisation bereitgestellt werden. Auf diese Weise kann der Simulator eine angepasste Fahrsituation an das Fahrzeug bereitstellen, die das Fahrzeug dazu veranlasst, ein definiertes Fahrszenario zu realisieren.

Grundsätzlich ist es denkbar, dass zwischen dem mindestens einen Agenten und dem Fahrzeug eine Kommunikation und/oder eine Synchronisation bereitgestellt werden kann, um ein selbstständiges Erlernen des Auftretens des mindestens einen definierten Fahrszenarios durch den mindestens einen Agenten mithilfe von Feedbacksignalen von dem Fahrzeug zu ermöglichen. Auf diese Weise kann der mindestens eine Agent mithilfe des Fahrzeuges angelernt werden.

Wie oben bereits erwähnt, kann es vorteilhaft sein, dass der mindestens eine Agent durch ein Verfahren eines maschinellen Lernens selbstständig eine Strategie erlernt, um die Wahrscheinlichkeit des Auftretens des mindestens einen definierten Fahrszenarios zu erhöhen. Beispielsweise ist es denkbar, dass der mindestens eine Agent basierend auf erhaltenen Feedbacksignalen von dem Fahrzeug seine Handlungsauswahl mit einem Ziel optimiert, eine Belohnungs-Funktion in Abhängigkeit von Feedbacksignalen von dem Fahrzeug zu maximieren. Auf diese Weise kann der Agent selbstständig erlernen, wie er das Testfahrzeug stören kann, sodass ein definiertes Fahrszenario herbeigeführt werden kann.

Weiterhin kann vorgesehen sein, dass das mindestens eine definierte Fahrszenario eine Anlaufphase und eine Startszene zum Testen (oder mit anderen Worten Testsituation) umfasst. Dabei kann der mindestens eine Agent zum Steuern von mindestens einem Umgebungsfahrzeug ausgeführt sein, um die Startszene zum Testen herbeizuführen. Auf diese Weise kann der Umstand auf eine vorteilhafte Weise berücksichtigt werden, dass das Testfahrzeug auf einem Hardware-in-the-Loop-Prüfplatz aus dem Stand nicht unverzüglich in die Startszene zum Testen versetzt werden kann. Das Testfahrzeug sollte zunächst starten, dann anfahren, beschleunigen, eine bestimmte Zielgeschwindigkeit erreichen, einen bestimmten Abstand oder einen Geschwindigkeitsunterschied zu einem Umgebungsfahrzeug, usw. erreichen.

Zumeist beginnt die Beschreibung eines Szenarios noch vor dem Eintreten einer testrelevanten Verkehrssituation. Das Verfahren kann auf eine vorteilhafte Weise dazu dienen, die Startszene eines Szenarios im Testsystem zu erstellen. Während es bei Model-in-the-Loop- oder Softwarein-the-Loop-Simulationen möglich ist, das Fahrzeug in der Startszene des Szenarios zu initialisieren (was ggf. das Fahren des Fahrzeugs voraussetzt), ist dies beim Testen mit realer Hardware auf Hardware-in-the-Loop-Prüfständen kaum zu bewältigen. Die reale Hardware erwartet plausible Eingangssignale und definierte Abläufe, um bestimmte Systemzustände zu erreichen, wie z. B. das Fahren mit 50 km/h. Das bedeutet, dass ein Test nicht mit der eigentlichen Startszene beginnen kann, sondern vorher eine Anlaufphase notwendig ist. In dieser Hochlaufphase kann das Testfahrzeug fahrbereit gemacht, aus dem Stillstand beschleunigt und zur Startszene des Szenarios geführt werden.

In der vorgeschlagenen Anwendung lernt der Agent, wie er das Fahrzeug zu bestimmten Aktionen, wie z. B. einem Fahrspurwechsel, anregen kann, die erforderlich sind, um die Startszene eines definierten Szenarios für einen gewünschten Test zu erreichen. Der Agent kann in der Anlaufphase aktiviert werden. Während dieser Phase beeinflusst der Agent die Verkehrskonstellation, um die Entscheidungsfindung des Fahrzeugs zur gewünschten Startszene zu lenken.

Des Weiteren kann auf dem Prüfplatz ein Artefaktgenerator bereitgestellt werden, um das mindestens eine definierte Fahrszenario in einen Szenarioskript zu transferieren. Der Artefaktgenerator kann ferner ein Artefakt für eine Agentensteuerung und ein Testskript bereitstellen. Bspw. ist es denkbar, dass im Szenarioskript Verkehrsteilnehmer, Verkehrsschilder, Infrastrukturteilnehmer und/oder Umgebungsobjekte simuliert werden, um künstliche Sensorinputs für die mindestens eine Sensoreinheit bereitzustellen. Zudem ist es denkbar, dass der Szenarioskript Straßenbeschreibungsdaten, 3D-Visualisierungsdaten und Szenariobedingungen, wie z. B. relativer Abstand, relative Geschwindigkeit, usw. zwischen dem Fahrzeug und dem Umgebungsfahrzeug, umfassen kann.

Dabei kann der Artefaktgenerator aus Testfallspezifikationen die Eingangsartefakte für die Testausführungssoftware generieren. Testfallspezifikationen können Informationen über das Fahrzeug und über die Umgebung enthalten. Um beide Informationen in einer Testfallspezifikation zu vereinen, kann eine minimalistische Szenariobeschreibung für die Beschreibung des Verkehrsszenarios verwendet werden. Die minimalistische Szenariobeschreibung kann nur so viele Informationen enthalten, die nötig sind, um das Testfahrzeug zu stimulieren. Szenarien für autonomes Fahren können in die Kategorien aufgeteilt werden, umfassend bspw. abstrakte, logische und konkrete Szenarien. Szenarien für Tests können hingegen mithilfe von Parametern konkret beschrieben werden, die für den Test relevant sind (z. B. Elemente, die einen Einfluss auf die zu testende Funktion haben), enthalten aber keine Informationen über nicht relevante Aspekte.

Weiterhin kann innerhalb des Artefaktgenerators ein Zusammenspiel zwischen einem Szenarioskript (bzw. einem Artefakt für eine Umgebungssimulation) und einem Testskript (bzw. einem Artefakt für die Testsoftware) verwaltet werden.

Vorzugsweise kann zwischen dem Szenarioskript und einem Testskript eine Kommunikation und/oder eine Synchronisation bereitgestellt werden, um bspw. einen gewünschten Test gezielt zu starten.

Szenarien für autonomes Fahren können die Art der Straße, auf der das definierte Szenario stattfindet (z. B. wäre der Standardwert eine gerade Straße mit zwei Fahrspuren), das Wetter (z. B. Standard: trocken) oder Fahrzeugtypen der umliegenden Fahrzeuge umfassen. Neben der Beschreibung des Szenarios enthalten Szenarien für Tests in der Regel auch Aktionen, die innerhalb des zu testenden Fahrzeugs stattfinden. Dies kann z. B. das Öffnen von Türen, das Betätigen von Schaltern wie dem Zündanlasser usw. sein, die ebenfalls in der gleichen Testfallspezifikationsdatei wie das Szenario beschrieben werden können.

Während in der Testfallspezifikation das Verkehrsszenario und die fahrzeuginternen Testschritte in einer einzigen Beschreibungsdatei gemischt sind, sollten die beiden Teile während der Testimplementierung aufgeteilt werden, um die erforderlichen Artefakte für die jeweiligen Softwareprogramme zu erzeugen. Dies ist nicht trivial, da einige Testaktionen für das Fahrzeug sowohl in der Szenariodatei als auch im Testskript für die Testsoftware beschrieben sein können. An dieser Stelle kann auf eine vorteilhafte Weise zwischen einem internem und externem Verhalten unterschieden werden, um zu entscheiden, was ein externer Beobachter der Verkehrssituation sehen könnte oder nicht. Aktionen, die von außen beobachtbar sind, können in das Fahrszenario geschrieben werden und der Rest in das Testskript.

Vorteilhafterweise kann während der Testdurchführung das Testskript und das Szenarioskript von Zeit zu Zeit synchronisiert werden. So kann bspw. das Szenarioskript verlangen, dass das Fahrzeug fahrbereit ist, bevor die Handlungen eines definierten Szenarios beginnen. Hierzu kann eine Kommunikation zwischen dem Szenarioskript und einem Testskript vorgesehen werden.

Vorteilhafterweise kann ferner zwischen dem Szenarioskript und dem Fahrzeug eine Kommunikation und/oder eine Synchronisation bereitgestellt werden, um bspw. das Fahrzeug zur gewünschten Startszene zu führen.

Zudem kann eine Logik zum Überwachen bereitgestellt werden, ob das mindestens eine definierte Fahrszenario eingetreten ist, um einen Test zu initiieren. Dabei ist es denkbar, dass die Logik in einem Szenarioskript, in dem Agenten, in einem Testskript und/oder in einer, bspw. externen, Testautomatisierungssoftware implementiert werden kann.

Außerdem kann auf dem Prüfplatz ein, insbesondere in einer maschinellen Sprache verfasster, Testskript bereitgestellt werden, um das Fahrzeug in mindestens einem definierten Fahrszenario zu testen. Dabei ist es denkbar, dass der Testskript Testeingaben, Testumgebung, erwartete Ergebnisse, erforderliche Aktionen im Fahrzeug, wie z. B. Schalterbetätigung, Start-Stopp-Befehle, Betätigung von Klappen und/oder Türen, usw., gewünschte Parameterwerte, Vorbedingungen und Nachbedingungen zum Testen umfassen,
Vorzugsweise kann zwischen dem Testskript und dem Fahrzeug eine Kommunikation und/oder eine Synchronisation bereitgestellt werden.

Ferner kann das Verfahren, welches wie oben beschrieben durchgeführt werden kann, zum Testen von einzelnen oder mehreren oder allen Systemen, wie z. B. Bremssystem, Lenksystem, usw., Steuereinheiten und/oder Funktionen, wie z. B. Konnektivität, automatisches Fahren, usw., eines Fahrzeuges verwendet werden. Dabei können die gleichen Vorteile erzielt werden, die oben im Zusammenhang mit dem erfindungsgemäßen Verfahren beschrieben worden sind.

Weiterhin kann das Verfahren, welches wie oben beschrieben durchgeführt werden kann, zur Fahrzeugentwicklung verwendet werden. Dabei können die gleichen Vorteile erzielt werden, die oben im Zusammenhang mit dem erfindungsgemäßen Verfahren beschrieben worden sind.

Die obenstehende Aufgabe wird ferner gelöst durch: Ein Computerprogrammprodukt, umfassend Befehle, die bei der Ausführung des Computerprogrammprodukts durch einen Computer diesen veranlassen, das Verfahren durchzuführen, welches wie oben beschrieben ablaufen kann. Dabei können die gleichen Vorteile erzielt werden, die oben im Zusammenhang mit dem erfindungsgemäßen Verfahren beschrieben worden sind.

Die obenstehende Aufgabe wird weiterhin gelöst durch: Eine Steuereinheit, aufweisend eine Recheneinheit und eine Speichereinheit, in welcher Befehle hinterlegt sind, welche bei zumindest teilweiser Ausführung durch die Recheneinheit ein Verfahren durchführen, welches wie oben beschrieben ablaufen kann. Dabei können die gleichen Vorteile erzielt werden, die oben im Zusammenhang mit dem erfindungsgemäßen Verfahren beschrieben worden sind.

Die obenstehende Aufgabe wird ferner gelöst durch: Einen Prüfplatz, bevorzugt ein Hardware-in-the-Loop-Prüfplatz, zum, insbesondere automatischen, Testen eines Fahrzeuges, vorzugsweise eines automatisiert oder autonom fahrenden Fahrzeuges, welcher speziell dazu ausgeführt ist, ein Verfahren auszuführen, welches wie oben beschrieben ablaufen kann, um das Fahrzeug in mindestens einem definierten Fahrszenario zu testen. Dabei können die gleichen Vorteile erzielt werden, die oben im Zusammenhang mit dem erfindungsgemäßen Verfahren beschrieben worden sind.

Weitere Vorteile und Merkmale der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei zeigen jeweils schematisch:
- Figur 1: eine Ausgangssituation zum Erklären einer Problematik bei einem Hardware-in-the-Loop-Prüfplatz,
- Figur 2: einen schematischen Aufbau eines Prüfplatzes,
- Figur 3: eine beispielhafte Fahrzeugumgebung zum Herbeiführen einer definierten Startszene zum Testen und/oder zum Erlernen eines Agenten zum Herbeiführen einer definierten Startszene, und
- Figur 4: beispielhafte Realisierungen von mindestens einem Agenten zum Herbeiführen einer definierten Testsituation.

In den nachfolgenden Figuren werden für die gleichen technischen Merkmale, auch von unterschiedlichen Ausführungsbeispielen, die identischen Bezugszeichen verwendet.

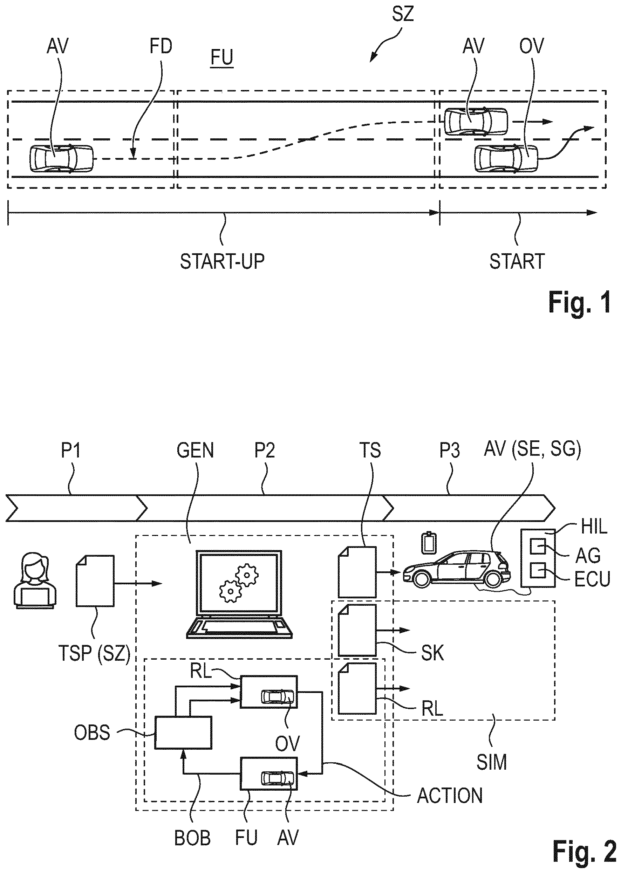

Die Fig. 1 zeigt eine beispielhafte virtuelle Fahrzeugumgebung FU, in der ein Fahrzeug AV, insbesondere ein automatisiert oder autonom fahrendes Fahrzeug AV, welches ebenfalls als ein Testfahrzeug bezeichnet werden kann, getestet werden kann. Unterschiedliche Tests können verschiedene Fahrszenarien SZ vorsehen. Auf den Hardware-in-the-Loop-Prüfplätzen hat sich als problematisch herausgestellt, dass ein Fahrzeug AV selbstständig Entscheidungen trifft, wie es fährt. Das Verhalten des Fahrzeugs AV kann deswegen nicht simuliert werden. Folglich ist es schwierig, gewünschte Fahrsituationen herbeizuführen, in denen das Fahrzeug AV, wie gewünscht, getestet werden kann.

Die Erfindung kann mithilfe der Fig. 2 bis 4 erklärt werden.

Es wird ein Verfahren bereitgestellt, welches zum, insbesondere automatischen, Testen eines Fahrzeugs AV, vorzugsweise eines automatisiert oder autonom fahrenden Fahrzeuges AV, auf einem Prüfplatz HIL, bevorzugt einem Hardware-in-the-Loop-Prüfplatz, entwickelt wurde um das Fahrzeug AV in mindestens einem definierten Fahrszenario SZ (kann ebenfalls als ein Verkehrsszenario bezeichnet werden) zu testen.

Ein in Fig. 1 angedeutetes Fahrszenario SZ bzw. Verkehrsszenario kann bspw. einen Fahrstreifenwechsel vorsehen.

Wie es die Fig. 2 verdeutlicht, kann dabei mindestens ein Fahrzeugsteuergerät SG und mindestens eine Sensoreinheit SE des Fahrzeuges AV an einen Simulator SIM auf dem Prüfplatz HIL (bspw. elektrisch und/oder datentechnisch und/oder signaltechnisch und/oder kommunikationstechnisch) angeschlossen werden.

Der Simulator SIM kann eine Fahrumgebung FU simulieren, um künstliche Sensorinputs für die mindestens eine Sensoreinheit SE bereitzustellen.

Der Simulator SIM kann ferner eine Fahrzeugdynamik FD bestimmen.

Der Simulator SIM kann weiterhin Ausgaben des mindestens einen Fahrzeugsteuergeräts SG in Reaktion auf künstliche Sensorinputs für die mindestens eine Sensoreinheit SE berücksichtigen, wie z. B. einen Lenkwinkel, Antriebsmoment usw.

Die Erfindung sieht mindestens einen Agent RL (kann ebenfalls als eine Agenten-Steuerung bezeichnet werden) zum Steuern von mindestens einem Umgebungsfahrzeug OV auf dem Prüfplatz HIL, insbesondere am Simulator SIM vor, der speziell dazu eingerichtet ist, um das Fahrzeug AV gezielt zu stören, um das mindestens eine definierte Fahrszenario SZ herbeizuführen.

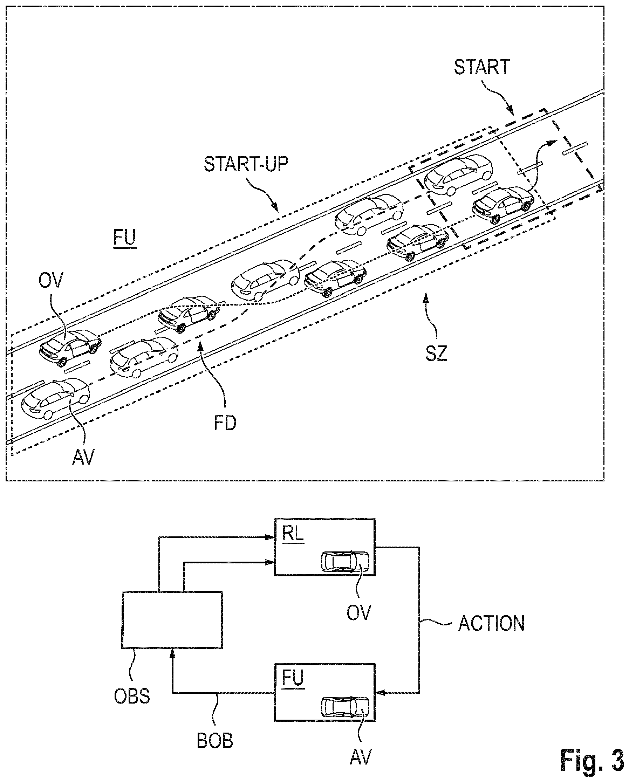

Wie es die Fig. 2 und 3 andeuten, kann der mindestens eine Agent RL durch ein Verfahren eines maschinellen Lernens selbstständig eine Strategie erlernen, um die Wahrscheinlichkeit des Auftretens des mindestens einen definierten Fahrszenarios SZ zu erhöhen.

Das Erlernen des mindestens einen Agenten RL kann bspw. vor dem Testen des Fahrzeuges AV erfolgen.

Ein Verfahren zum selbstständigen Erlernen einer Strategie kann einen Observer OBS umfassen. Der Observer OBS kann Beobachtungen BOB von der Fahrzeugumgebung FU, insbesondere inklusive des Testfahrzeuges, erhalten.

Der Observer OBS kann Feedbacknachrichten an den Agenten RL schicken.

Der Agent RL kann daraufhin Aktionen ACTION durchführen, bspw. vorwärtsfahren, nach links fahren, nach rechts fahren und ggf. beschleunigen.

Das Verfahren schlägt vor, mindestens ein Umgebungsfahrzeug OV so steuern, sodass es das Fahrzeug AV gezielt stört, um ein definiertes Fahrszenario SZ herbeizuführen, die man für einen gewünschten Test benötigt. Beispielsweise kann das Umgebungsfahrzeug OV das Fahrzeug AV so beeinflussen, dass das Fahrzeug AV einen Fahrstreifenwechsel durchführt. Das Umgebungsfahrzeug OV kann weiterhin einen bestimmten Folgeabstand zu einem vorausfahrenden Fahrzeug einregeln.

Wie oben bereits erwähnt, kann das Umgebungsfahrzeug OV mithilfe eines Verfahrens zum maschinellen Lernen (vorzugsweise eines Verfahrens zum bestärkenden Lernen oder eng. Reinforcement-Learning) gesteuert werden, welches in einer Trainingsumgebung durch ein Versuchs- und Irrtum-Verfahren selbstständig erlernt hat, wie sich das Umgebungsfahrzeug OV verhalten muss, um bestimmte Fahrszenarien SZ herbeizuführen.

Mindestens ein solcher Agent RL wird auf dem Prüfplatz HIL, insbesondere am Simulator SIM, implementiert.

Über ein Szenarioskript SK kann die Steuerung von mindestens einem Umgebungsfahrzeug OV durch mindestens einen Agenten RL aktiviert werden.

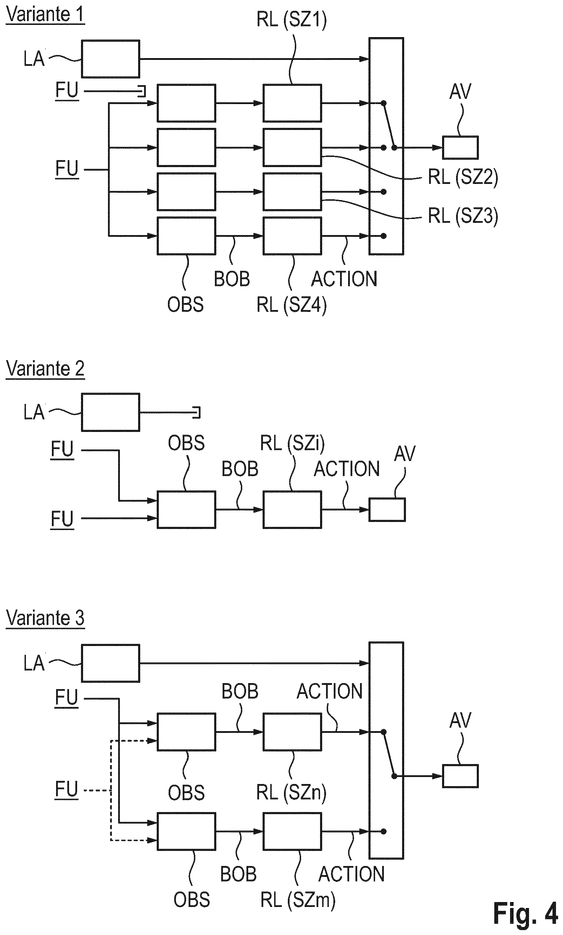

Wie es die Fig. 4 vorschlägt, können mehrere Agenten RL mit einer Spezialisierung auf der Realisierung von unterschiedlichen Fahrszenarien SZ eines bestimmten Typs (oben in der Fig. 4), mehrerer bestimmter Typen (unten in der Fig. 4) oder aller gewünschten Typen (mittig in der Fig. 4) implementiert werden.

Eine (vorzugsweise regelbasierte) Logik LA (bspw. in einem Szenarioskript SK und/oder in einer Agenten-Steuerung bzw. in dem Agenten RL selbst) kann auswählen, welcher Agent RL für welchen Typ verwendet werden kann.

Eine weitere Logik (bspw. in einem Szenarioskript SK, in einem Testskript TS und/oder in einer Testautomatisierungssoftware) kann schließlich überwachen, ob das definierte Fahrszenario SZ wie gewünscht erreicht wurde. Daraufhin kann diese Logik ein Bestätigungssignal an ein Szenarioskript SK und/oder ein Startsignal an ein Testskript TS senden, sodass der gewünschte Test gestartet werden kann.

Eine Agenten-Steuerung kann folglich mehrere Agenten RL umfassen, zwischen denen je nach einem definierten Fahrszenario SZ umgeschaltet werden kann.

Wie es oben in der Fig. 4 angedeutet ist, kann ein Agent RL jeweils speziell für ein Fahrszenario SZ eines bestimmten Typs ausgelegt sein.

Wie es mittig in der Fig. 4 angedeutet ist, kann ein Agent RL für alle Fahrszenarien SZi für sämtliche gewünschte Tests ausgelegt sein.

Wie es unten in der Fig. 4 angedeutet ist, kann ein Agent RL für einen Bereich von ähnlichen Fahrszenarien SZn oder SZm ausgelegt sein. Diese Variante kann präferiert werden.

Wenn ein Agent RL für einen Bereich von ähnlichen Fahrszenarien SZ oder für alle Fahrszenarien SZ ausgelegt ist, dann kann er über einen Observator OBS Informationen erhalten, wie weit er vor dem Erreichen des jeweiligen konkreten Fahrszenarios SZ entfernt ist.

Unterschiedliche Fahrszenarien SZ können durch Szenariobedingungen und/oder Parameter definiert werden, wie bspw. der relative Abstand oder die relative Fahrgeschwindigkeit zwischen dem Umgebungsfahrzeug OV und dem Fahrzeug AV.

Das Verfahren kann weiterhin zur Steuerung mehrerer Umgebungsfahrzeuge OV verwendet werden. Für jedes Umgebungsfahrzeug OV kann eine individuelle oder eine gemeinsame Agenten-Steuerung implementiert werden.

Wie es die Fig. 3 andeutet, kann das mindestens eine definierte Fahrszenario SZ eine Anlaufphase START-UP und eine Startszene START zum Testen umfassen. Dabei kann der mindestens eine Agent RL zum Steuern von mindestens einem Umgebungsfahrzeug OV ausgeführt sein, um die Startszene START zum Testen herbeizuführen. Somit kann berücksichtigt werden, dass das Fahrzeug AV auf einem Hardware-in-the-Loop-Prüfplatz aus dem Stand nicht unverzüglich in die Startszene START versetzt werden kann. Das Fahrzeug AV sollte zunächst starten, dann anfahren, beschleunigen, ggf. eine bestimmte Zielgeschwindigkeit erreichen, bspw. einen bestimmten Abstand und/oder einen Geschwindigkeitsunterschied zu einem Umgebungsfahrzeug OV, usw. erreichen.

Wie es die Fig. 3 somit zeigt, beginnt die Beschreibung eines definierten Fahrszenarios SZ noch vor dem Eintreten einer Startszene START, die für den Test relevant ist. Das Verfahren dient vorteilhafterweise dazu, die Startszene START eines definierten Fahrszenarios SZ im Testsystem zu erstellen. Während es bei Model-in-the-Loop- oder Software-in-the-Loop-Simulationen möglich ist, das Fahrzeug in der Startszene START des definierten Fahrszenarios SZ zu initialisieren. Die reale Hardware erwartet plausible Eingangssignale und definierte Abläufe, um bestimmte Systemzustände zu erreichen, wie z. B. das Fahren mit 50 km/h. Das bedeutet, dass ein Test nicht mit der eigentlichen Startszene START beginnen kann, sondern vorher eine Anlaufphase START-UP erforderlich ist. In dieser Anlaufphase START-UP kann das Fahrzeug AV fahrbereit gemacht, aus dem Stillstand beschleunigt und zur Startszene START des Szenarios geführt werden. Der obere Teil der Fig. 3 veranschaulicht eine Anlaufphase START-UP vor einer Startszene START eines gewünschten Testes.

Wie es die Fig. 3 unten andeutet, kann der Agent RL erlernen, wie er das Fahrzeug AV zu bestimmten Aktionen ACTION, wie z. B. einem Fahrspurwechsel, anregen kann, die erforderlich sind, um die Startszene START eines definierten Fahrszenarios SZ für einen gewünschten Test zu erreichen. Der Agent RL kann bspw. in der Anlaufphase START-UP aktiviert werden. Während der Anlaufphase START-UP kann der Agent RL die Verkehrskonstellation so beeinflussen, um die Entscheidungsfindung des Fahrzeugs AV zur gewünschten Startszene START zu lenken. Im Kontext des Prüfplatzes HIL aus Fig. 2 ist der trainierte Agent RL ein weiteres Artefakt neben dem Szenarioskript SK und dem Testskript TS innerhalb eines Artefaktgenerators GEN.

Wie es die Fig. 2 andeutet, kann ein Test eine Testfallspezifikationsphase P1, eine Testimplementierungsphase P2 und eine Testdurchführungsphase P3 umfassen.

Wie es die Fig. 2 andeutet, kann der Artefaktgenerator GEN dazu dienen, um das mindestens eine definierte Fahrszenario SZ in einen Szenarioskript SK zu transferieren. Der Artefaktgenerator GEN kann ferner ein Artefakt für eine Agentensteuerung und ein Testskript TS bereitstellen. Bspw. ist es denkbar, dass im Szenarioskript SK Verkehrsteilnehmer, Verkehrsschilder, Infrastrukturteilnehmer und/oder Umgebungsobjekte simuliert werden, um künstliche Sensorinputs für die mindestens eine Sensoreinheit SE bereitzustellen. Zudem ist es denkbar, dass der Szenarioskript SK Straßenbeschreibungsdaten, 3D-Visualisierungsdaten und Szenariobedingungen, wie z. B. relativer Abstand, relative Geschwindigkeit, usw. zwischen dem Fahrzeug AV und dem Umgebungsfahrzeug OV, umfassen kann.

Wie es die Fig. 2 verdeutlicht, kann der Artefaktgenerator GEN aus Testfallspezifikationen TSP die Eingangsartefakte für die Testausführungssoftware bzw. einen Testskript TS generieren. Testfallspezifikationen können Informationen über das Fahrzeug AV und über die Fahrzeugumgebung FU enthalten. Um beide Informationen in einer Testfallspezifikation TSP zu vereinen, kann eine minimalistische Szenariobeschreibung für die Beschreibung des definierten Fahrszenarios SZ verwendet werden. Die minimalistische Szenariobeschreibung kann nur so viele Informationen enthalten, die nötig sind, um das Fahrzeug AV zu stimulieren.

Weiterhin kann innerhalb des Artefaktgenerators GEN ein Zusammenspiel zwischen einem Szenarioskript SK (bzw. einem Artefakt für eine Umgebungssimulation) und einem Testskript TS (bzw. einem Artefakt für die Testsoftware) verwaltet werden. Hierzu kann zwischen dem Szenarioskript SK und einem Testskript TS eine Kommunikation und/oder eine Synchronisation bereitgestellt werden, um bspw. einen gewünschten Test gezielt zu starten.

Szenarien für autonomes Fahren können die Art der Straße, auf der das definierte Szenario stattfindet (z. B. wäre der Standardwert eine gerade Straße mit zwei Fahrspuren), das Wetter (z. B. Standard: trocken) oder Fahrzeugtypen der Umgebungsfahrzeuge OV umfassen. Neben der Beschreibung des definierten Fahrszenarios SZ enthalten Szenarien für Tests in der Regel auch Aktionen ACTION, die innerhalb des Fahrzeugs AV stattfinden. Die Aktionen ACTION können z. B. das Öffnen von Türen, das Betätigen von Schaltern wie dem Zündanlasser usw. umfassen, die ebenfalls in der gleichen Testfallspezifikationsdatei wie das definierte Fahrszenario SZ beschrieben werden können.

Während in der Testfallspezifikation das definierte Fahrszenario SZ und die fahrzeuginternen Testschritte in einer einzigen Beschreibungsdatei gemischt sind, sollten die beiden Teile während der Testdurchführung aufgeteilt werden, um die erforderlichen Artefakte für die jeweiligen Softwareprogramme zu erzeugen. Dabei kann auf eine vorteilhafte Weise zwischen einem internen und externen Verhalten des Fahrzeuges AV unterschieden werden, um zu entscheiden, was ein externer Beobachter der Verkehrssituation sehen könnte oder nicht. Aktionen ACTION, die von außen beobachtbar sind, können in das definierte Fahrszenario SZ geschrieben werden, und Aktionen ACTION, die von außen nicht beobachtbar sind, können in das Testskript TS geschrieben werden.

Vorteilhafterweise kann während der Testdurchführung das Testskript TS und das Szenarioskript SK von Zeit zu Zeit, bspw. periodisch, synchronisiert werden. So kann bspw. das Szenarioskript SK verlangen, dass das Fahrzeug AV fahrbereit ist, bevor die Handlungen eines definierten Fahrszenarios SZ beginnen. Hierzu kann eine Kommunikation zwischen dem Szenarioskript SK und einem Testskript TS vorgesehen werden.

Vorteilhafterweise kann ferner zwischen dem Szenarioskript SK und dem Fahrzeug AV eine Kommunikation und/oder eine Synchronisation bereitgestellt werden, um bspw. das Fahrzeug AV zur gewünschten Startszene START entsprechend zu leiten.

Zudem kann eine Logik zum Überwachen bereitgestellt werden, ob das mindestens eine definierte Fahrszenario SZ eingetreten ist, um einen Test zu initiieren. Dabei ist es denkbar, dass die Logik in einem Szenarioskript SK, in dem Agenten RL, in einem Testskript TS und/oder in einer, bspw. externen, Testautomatisierungssoftware implementiert werden kann.

Wie es die Fig. 2 weiterhin andeutet, kann auf dem Prüfplatz HIL ein, insbesondere in einer maschinellen Sprache verfasster, Testskript TS bereitgestellt werden, um das Fahrzeug AV in mindestens einem definierten Fahrszenario SZ zu testen. Dabei ist es denkbar, dass der Testskript TS Testeingaben, Testumgebung, erwartete Ergebnisse, erforderliche Aktionen im Fahrzeug AV, wie z. B. Schalterbetätigung, Start-Stopp-Befehle, Betätigung von Klappen und/oder Türen, usw., gewünschte Parameterwerte, Vorbedingungen und Nachbedingungen zum Testen umfassen kann.

Vorzugsweise kann zwischen dem Testskript TS und dem Fahrzeug AV eine Kommunikation und/oder eine Synchronisation bereitgestellt werden.

Das Verfahren, welches wie oben beschrieben durchgeführt werden kann, kann zum Testen von einzelnen oder mehreren oder allen Systemen, wie z. B. Bremssystem, Lenksystem, usw., Steuereinheiten SE und/oder Funktionen, wie z. B. Konnektivität, automatisches Fahren, usw., eines Fahrzeuges AV verwendet werden.

Das Verfahren, welches wie oben beschrieben durchgeführt werden kann, kann zur Fahrzeugentwicklung verwendet werden.

Ein korrespondierendes Computerprogrammprodukt AG, eine korrespondierende Steuereinheit ECU, und ein korrespondierender Prüfplatz HIL, bevorzugt ein Hardware-in-the-Loop-Prüfplatz, zum Durchführen eines entsprechenden Verfahrens stellen ebenfalls Aspekte der Erfindung dar.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- HIL: Prüfplatz
- AG: Computerprogrammprodukt
- ECU: Steuereinheit

- AV: Fahrzeug
- SE: Sensoreinheit
- SG: Fahrzeugsteuergerät

- SIM: Simulator
- FD: Fahrzeugdynamik
- FU: Fahrumgebung

- OV: Umgebungsfahrzeug

- SZ: Fahrszenario
- START-UP: Anlaufphase
- START: Startszene

- GEN: Artefaktgenerator

- TS: Testskript
- SK: Szenarioskript
- RL: Agent

- LA: Logik

- OBS: Observer
- BOB: Beobachtungen
- ACTION: Aktionen

- P1: Testspezifikationsphase
- P2: Testimplementierungsphase
- P3: Testdurchführungsphase

## Patentansprüche

1. Verfahren zum, insbesondere automatischen, Testen eines Fahrzeuges (AV), vorzugsweise eines automatisiert oder autonom fahrenden Fahrzeuges (AV), auf einem Prüfplatz (HIL), bevorzugt einem Hardware-in-the-Loop-Prüfplatz, um das Fahrzeug (AV) in mindestens einem definierten Fahrszenario (SZ) zu testen, bspw. bei einem Fahrstreifenwechsel,
wobei mindestens ein Fahrzeugsteuergerät (SG) und mindestens eine Sensoreinheit (SE) des Fahrzeuges (AV) an einen Simulator (SIM) auf dem Prüfplatz (HIL) angeschlossen werden,
wobei der Simulator (SIM) eine Fahrumgebung (FU) simuliert, um künstliche Sensorinputs für die mindestens eine Sensoreinheit (SE) bereitzustellen,
wobei der Simulator (SIM) Ausgaben des mindestens einen Fahrzeugsteuergeräts (SG) in Reaktion auf künstliche Sensorinputs für die mindestens eine Sensoreinheit (SE) berücksichtigt, wie z. B. einen Lenkwinkel, Antriebsmoment usw.,
und wobei auf dem Prüfplatz (HIL) mindestens ein Agent (RL) zum Steuern von mindestens einem Umgebungsfahrzeug (OV) bereitgestellt wird, um das Fahrzeug (AV) gezielt zu stören, sodass das mindestens eine definierte Fahrszenario (SZ) herbeigeführt wird.

2. Verfahren nach Anspruch 1,
**dadurch gekennzeichnet,**
**dass** das mindestens eine definierte Fahrszenario (SZ) für unterschiedliche Tests mehrere definierte Fahrszenarien (SZ) umfasst,
wobei für die mehreren definierten Fahrszenarios (SZ) korrespondierende Agenten (RL) bereitgestellt werden,
oder wobei für die mehreren definierten Fahrszenarios (SZ) ein Agent (RL) bereitgestellt wird,
oder wobei für die mehreren definierten Fahrszenarios (SZ) eine Auswahl an Agenten (RL) bereitgestellt wird

3. Verfahren nach einem der vorhergehenden Ansprüche,
**dadurch gekennzeichnet,**
**dass** der mindestens eine Agent (RL) speziell dazu ausgeführt ist,
um ein definiertes Fahrszenario (SZ) für einen gewünschten Test herbeizuführen,
oder um alle definierte Fahrszenarios (SZ) für alle gewünschten Tests herbeizuführen, oder um mehrere definierte Fahrszenarios (SZ) für mehrere gewünschte Tests herbeizuführen.

4. Verfahren nach einem der vorhergehenden Ansprüche,
**dadurch gekennzeichnet,**
**dass** eine, insbesondere regelbasierte, Logik (LA) zum Auswählen eines passenden Agenten (RL) für einen gewünschten Test bereitgestellt wird, um das Fahrzeug (AV) in mindestens einem definierten Fahrszenario (SZ) zu testen,
wobei insbesondere die Logik (LA) in einem Szenarioskript (SK) und/oder in dem Agenten (RL) implementiert wird,
wobei bevorzugt zwischen einem Szenarioskript (SK) und dem mindestens einen Agenten (RL) eine Kommunikation und/oder eine Synchronisation bereitgestellt werden.

5. Verfahren nach einem der vorhergehenden Ansprüche,
**dadurch gekennzeichnet,**
**dass** zwischen dem mindestens einen Agenten (RL) und dem Fahrzeug (AV) eine Kommunikation und/oder eine Synchronisation bereitgestellt werden,
um ein selbstständiges Erlernen des Auftretens des mindestens einen definierten Fahrszenarios (SZ) durch den mindestens einen Agenten (RL) mithilfe von Feedbacksignalen von dem Fahrzeug (AV) zu ermöglichen.

6. Verfahren nach einem der vorhergehenden Ansprüche,
**dadurch gekennzeichnet,**
**dass** der mindestens eine Agent (RL) durch ein Verfahren eines maschinellen Lernens selbstständig eine Strategie erlernt, vorzugsweise vor dem Durchführen eines Tests, um die Wahrscheinlichkeit des Auftretens des mindestens einen definierten Fahrszenarios (SZ) zu erhöhen,
und/oder dass der mindestens eine Agent (RL) basierend auf erhaltenen Feedbacksignalen von dem Fahrzeug (AV) seine Handlungsauswahl mit einem Ziel optimiert, eine Belohnungs-Funktion in Abhängigkeit von Feedbacksignalen von dem Fahrzeug (AV) zu maximieren.

7. Verfahren nach einem der vorhergehenden Ansprüche,
**dadurch gekennzeichnet,**
**dass** das mindestens eine definierte Fahrszenario (SZ) eine Anlaufphase (START-UP) und eine Startszene (START) zum Testen umfasst,
wobei insbesondere der mindestens eine Agent (RL) zum Steuern von mindestens einem Umgebungsfahrzeug (OV) ausgeführt ist, um die Startszene (START) zum Testen herbeizuführen.

8. Verfahren nach einem der vorhergehenden Ansprüche,
**dadurch gekennzeichnet,**
**dass** auf dem Prüfplatz (HIL) ein Artefaktgenerator (GEN) bereitgestellt wird, um das mindestens eine definierte Fahrszenario (SZ) in einen Szenarioskript (SK) zu transferieren,
wobei insbesondere im Szenarioskript (SK) Verkehrsteilnehmer, Verkehrsschilder, Infrastrukturteilnehmer und/oder Umgebungsobjekte simuliert werden, um künstliche Sensorinputs für die mindestens eine Sensoreinheit (SE) bereitzustellen,
wobei vorzugsweise der Szenarioskript (SK) Straßenbeschreibungsdaten, 3D-Visualisierungsdaten und Szenariobedingungen, wie z. B. relativer Abstand, relative Geschwindigkeit, usw. zwischen dem Fahrzeug (AV) und dem Umgebungsfahrzeug (OV), umfasst,
wobei bevorzugt zwischen dem Szenarioskript (SK) und einem Testskript (TS) eine Kommunikation und/oder eine Synchronisation bereitgestellt werden,
wobei insbesondere zwischen dem Szenarioskript (SK) und dem Fahrzeug (AV) eine Kommunikation und/oder eine Synchronisation bereitgestellt werden.

9. Verfahren nach einem der vorhergehenden Ansprüche,
**dadurch gekennzeichnet,**
**dass** eine Logik zum Überwachen bereitgestellt wird, ob das mindestens eine definierte Fahrszenario (SZ) eingetreten ist, um einen Test zu initiieren,
wobei insbesondere die Logik in einem Szenarioskript (SK), in dem Agenten (RL), in einem Testskript (TS) und/oder in einer, bspw. externen, Testautomatisierungssoftware implementiert wird.

10. Verfahren nach einem der vorhergehenden Ansprüche,
**dadurch gekennzeichnet,**
**dass** auf dem Prüfplatz (HIL) ein, insbesondere in einer maschinellen Sprache verfasster, Testskript (TS) bereitgestellt wird, um das Fahrzeug (AV) in mindestens einem definierten Fahrszenario (SZ) zu testen,
wobei insbesondere der Testskript (TS) Testeingaben, Testumgebung, erwartete Ergebnisse, erforderliche Aktionen im Fahrzeug (AV), wie z. B. Schalterbetätigung, Start-Stopp-Befehle, Betätigung von Klappen und/oder Türen, usw., gewünschte Parameterwerte, Vorbedingungen und Nachbedingungen zum Testen umfassen, wobei vorzugsweise zwischen dem Testskript (TS) und dem Fahrzeug (AV) eine Kommunikation und/oder eine Synchronisation bereitgestellt werden.

11. Verwenden des Verfahrens nach einem der vorhergehenden Verfahrensansprüche zum Testen von einzelnen oder mehreren oder allen Systemen, wie z. B. Bremssystem, Lenksystem, usw., Steuereinheiten (SE) und/oder Funktionen, wie z. B. Konnektivität, automatisches Fahren, usw., eines Fahrzeuges (AV).

12. Verwenden des Verfahrens nach einem der vorhergehenden Verfahrensansprüche 1 bis 10 zur Fahrzeugentwicklung.

13. Computerprogrammprodukt (AG), umfassend Befehle, die bei der Ausführung des Computerprogrammprodukts (AG) durch einen Computer diesen veranlassen, das Verfahren nach einem der vorhergehenden Verfahrensansprüche 1 bis 10 durchzuführen.

14. Steuereinheit (ECU), aufweisend eine Recheneinheit und eine Speichereinheit, in welcher Befehle hinterlegt sind, welche bei zumindest teilweiser Ausführung durch die Recheneinheit ein Verfahren nach einem der vorhergehenden Verfahrensansprüche 1 bis 10 durchführen.

15. Prüfplatz (HIL), bevorzugt ein Hardware-in-the-Loop-Prüfplatz, zum, insbesondere automatischen, Testen eines Fahrzeuges (AV), vorzugsweise eines automatisiert oder autonom fahrenden Fahrzeuges (AV), welcher speziell dazu ausgeführt ist, ein Verfahren nach einem der vorhergehenden Verfahrensansprüche 1 bis 10 auszuführen, um das Fahrzeug (AV) in mindestens einem definierten Fahrszenario (SZ) zu testen.
